# EUROPÄISCHE PATENTANMELDUNG

(11) **EP 0 970 920 A1**
(43) Veröffentlichungstag der Anmeldung: **12.01.2000**
(21) Anmeldenummer: 99250224.5
(22) Anmeldetag: 06.07.1999
(51) Int. Cl.: C02F 3/00, C02F 3/34

(54) **Mischbiozönose**

(30) Priorität: 10.07.1998 DE 19832640
(71) Anmelder: Wilk, Bernd-Ulrich, 12559 Berlin (DE); Bräunlich, Ursula, 04416 Markkleeberg (DE)
(72) Erfinder: Wilk, Bernd-Ulrich, 12559 Berlin (DE); Bräunlich, Ursula, 04416 Markkleeberg (DE)
(74) Vertreter: Buczor, Monika

(57) **Zusammenfassung**

Die Erfindung betrifft die Verwendung einer Mischbiozönose, die aus dem Abwasser industrieller Melkanlagen besteht, für die biologische Reinigung von gewerblichen, insbesondere wäschereispezifischen Abwässern. Das Abwasser industrieller Melkanlagen besteht aus Wasser, Restmilch, tierischen Exkrementen, Tensiden und Desinfektionsmitteln. Es lagert in offenen Becken oder Behältern 20 bis 60 Tage bei ständigen Zufluß von frischem Abwasser, wobei ein unwillkürlicher Lufteintrag stattfindet. Zum Animpfen gewerblicher, insbesondere wäschereispezifischer Abwässer werden 7% bis 12% der Abwässer industrieller Melkanlagen, bezogen auf das Gesamtvolumen der installierten biologische Reinigungsstufe, eingesetzt.

## Beschreibung

Die Erfindung betrifft die Verwendung einer an sich bekannten Substanz als Mischbiozönose für die biologische Reinigung gewerblicher, insbesondere wäschereispezifischer Abwässer.

Aus der Praxis ist bekannt, Mischbiozönosen für die biologische Reinigung wäschereispezifischer Abwässer durch Selektion von geeigneten Mikroorganismen zu gewinnen. Die Vermehrung erfolgt durch Schaffung von dafür günstigen Bedingungen.

Diese Verfahrensweise hat den Nachteil, daß die Herstellung größerer Mengen dieser Mischbiozönose sehr aufwendig und teuer ist.

Die Aufgabe der Erfindung besteht darin, eine an sich bekannte Substanz, die als zu entsorgendes Abfallprodukt anfällt, ohne weitere Bearbeitung oder Zusätze, als Mischbiozönose zur biologischen Reinigung gewerblicher, insbesondere wäschereispezifischer Abwässer zu verwenden.

Erfindungegemäß wird die Aufgabe dadurch gelöst, daß das Abwasser von industriellen Melkanlagen als Mischbiozönose für die biologische Reinigung gewerblicher, insbesondere wäschereispezifischer Abwässer eingesetzt wird. Dabei kommt das in Sammelbehältern, wie offenen Becken gelagerte Abwasser so wie es ist, d.h. ohne weitere Be- oder Verarbeitung bzw. Zusätze zum Einsatz.

Dieses Abwasser von industriellen Melkanlagen enthält tierische Exkremente, Wasser, Restmilch vom Reinigen der Melkanlage und Tenside sowie Desinfektionsmittel vom Reinigen der Euter und der Melkanlage und Luft, die während des Hantierens und Einleitens der genannten Bestandteile unwillkürlich eingebracht wird. Dieses Abwasser wird in offenen Becken bzw. Behältern gelagert. Während der Lagerzeit von 20 bis 60 Tagen wird ständig frisches Abwasser aus der Melkanlage zugeführt, so daß eine Durchmischung, verbunden mit einem Lufteintrag, stattfindet. In den offenen Becken bzw. Behältern ist das Abwasser einer ständigen Oberflächenbelüftung, ähnlich unbelüfteter Oxydationsteichanlagen der kommunalen Abwasserreinigung ausgesetzt. Außerdem wird der Beckeninhalt in gewissen Zeitabständen mechanisch umgewälzt.

In den offenen Becken entwickeln sich im Abwasser unter den oben beschriebenen Bedingungen Mikroorganismen, die als erfindungsgemäße Mischbiozönose für die biologische Reinigung gewerblicher, insbesondere wäschereispezifischer Abwässer erfolgreich einsetzbar sind. Sie sind beständig gegenüber Desinfektionsmitteln, wie sie in wäschereispezifischen Abwässern vorhanden sind.

Durch die Verwendung dieser Mischbiozönose zu Reinigung gewerblicher, insbesondere wäschereispezifischer Abwässer unter hier nicht weiter beschriebenen, an sich bekannten Bedingungen ist ein biologischer Reinigungseffekt von 75% bis 90 % erreichbar.

Zum Animpfen werden 7% bis 12 % der erfindungsgemäßen Mischbiozönose, bezogen auf das Gesamtvolumen der installierten biologischen Reinigungsstufe, den gewerblichen Abwässern zugesetzt.

Die Zusammensetzung der Mischbiozönose zum Animpfen ist folgende: Die Schadstofffracht (chemischer Sauerstoffbedarf) CSB beträgt
1800 mg/l bis 6000 mg/l. Dazu kommen

| | |
|---|---|
| NH₄ | 10 mg/l bis 100 mg/l |
| NO₃ | 5 mg/l bis 30 mg/l |
| PO₄ | 19 mg/l bis 150 mg/l. |

Der pH-Wert beträgt 5,8 bis 8,5.

Vorteilhafterweise wird in der Melkanlage ein kombiniertes Wasch- und Desinfektionsmittel eingesetzt. Es ist aber auch möglich separate Wasch- und Desinfektionsmittel zu verwenden.

Die erfindungsgemäße Mischbiozönose ist außerdem einsetzbar zur biologischen Reinigung von Abwässern aus landwirtschaftlichen Betrieben z.B. Milchvieh- und Schweinemastanlagen. Nach Vorbehandlung ist sie auch in der Lebensmittelindustrie, wie Schlachtbetrieben, Großbäckereien, Waffelbetrieben oder in der Getränkeindustrie sowie ähnlich gelagerten Industriezweigen verwendbar.

## Patentansprüche

1. Mischbiozönose zur biologischen Reinigung gewerblichen, insbesondere wäschereispezifischer Abwässer, dadurch gekennzeichnet, daß
die Mischbiozönose das Abwasser von industriellen Melkanlagen ist, das aus Wasser, Restmilch, tierischen Exkrementen, Tensiden und Desinfektionsmitteln besteht,
wobei das Abwasser der industriellen Melkanlagen in offenen Becken oder Behältern 20 bis 60 Tage lagert, bei ständigem Zufluß von frischem Abwasser verbunden mit einem unwillkürlichen Lufteintrag
und daß sich in dieser Atmosphäre Mikroorganismen bilden, die zur biologischen Reinigung von gewerblichen, insbesondere wäschereispezifischen Abwässern geeignet sind.

2. Mischbiozönose nach Anspruch 1, dadurch gekennzeichnet, daß die Abwässer der industriellen Melkanlagen in den offenen Becken oder Behältern in Abständen zusätzlich mechanisch mit Luft beaufschlagt sind.

3. Mischbiozönose nach Anspruch 1 und 2, dadurch gekennzeichnet, daß die Abwässer der industriellen Melkanlage einer ständigen Oberflächenbelüftung ausgesetzt sind.

4. Mischbiozönose nach Anspruch 1 bis 3, dadurch gekennzeichnet, daß die Abwässer der industriellen Melkanlage für die biologische Reinigung anderer, den wäschereispezifischen Abwässern ähnlichen, gewerblichen Abwässern, wie Abwässern der Lebensmittel- oder Getränkeindustrie bzw. landwirtschaftlicher Betriebe einsetzbar sind.

5. Mischbiozönose nach Anspruch 1 bis 4, dadurch gekennzeichnet, das die Abwässer industrieller Melkanlagen nach der Verweilzeit von 20 bis 60 Tagen in offenen Becken bzw. Behältern ohne weitere Ver- oder Bearbeitung und ohne weitere Zusätze zum Animpfen der gewerblichen, vorzugsweise wäschereispezifischen Abwässer oder ähnlicher Abwässer einsetzbar sind.

6. Mischbiozönose nach Anspruch 1 bis 4, dadurch gekennzeichnet, daß die Abwässer industrieller Melkanlagen nach Vorbehandlung zum Animpfen von gewerblichen Abwässern einsetzbar sind.

7. Mischbiozönose nach Anspruch 1 bis 6 , dadurch gekennzeichnet, daß zum Animpfen der gewerblichen, vorzugsweise wäschereispezifischen Abwässer 7% bis 12 % Abwässer industrieller Melkanlagen, bezogen auf das Gesamtvolumen der installierten biologischen Reinigungsstufe, eingesetzt sind.

8. Mischbiozönose nach Anspruch 1 bis 7, dadurch gekennzeichnet, daß die Schadstofffracht des Abwassers industrieller Melkanlagen CSB 1800 mg/l bis 6000 mg/l beträgt.

9. Mischbiozönose nach Anspruch 1 bis 8, dadurch gekennzeichnet, daß das Abwasser industrieller Melkanlagen 10 bis 100 mg/l NH₄, 5 bis 30 mg/l NO₃ und 19 bis 150 mg/l PO₄ enthält.

10. Mischbiozönose nach Anspruch 1 bis 9, dadurch gekennzeichnet, daß das Abwasser industrieller Melkanlagen einen pH-Wert zwischen 5,8 und 8,5 hat.

11. Mischbiozönose nach Anspruch 1 bis 10, dadurch gekennzeichnet, daß sie desinfektionsmittelstabil ist.
